# EUROPEAN PATENT APPLICATION

(11) **EP 4 470 825 A1**
(43) Date of publication of application: **04.12.2024**
(21) Application number: 24178726.6
(22) Date of filing: 29.05.2024
(51) Int. Cl.: B60L 53/65, B60L 53/80, H04W 4/80

(54) **BATTERY-SWAPPABLE ELECTRIC VEHICLE, SWAPPABLE BATTERY, AND BATTERY-BINDING METHOD THEREOF**

(30) Priority: 31.05.2023 US 202363505236 P
(71) Applicant: Gogoro Inc., Wanchai, Hong Kong (CN)
(72) Inventor: LIAO, En-Yi, 333 Taoyuan City (TW); CHEN, Ching, 333 Taoyuan City (TW); CHEN, Chien-Chung, 333 Taoyuan City (TW); HSU, Ying-Wei, 333 Taoyuan City (TW); PRAMANIK, Suraj, 333 Taoyuan City (TW); HUANG, Yi-Shu, 333 Taoyuan City (TW); CHOU, Jing-Wei, 333 Taoyuan City (TW); WU, Jia-Yang, 333 Taoyuan City (TW)
(74) Representative: Viering, Jentschura & Partner mbB Patent- und Rechtsanwälte

(57) **Abstract**

A battery-binding method includes: electrically connecting an unbound swappable battery to a battery-swappable electric vehicle; making the swappable battery retrieve a vehicle-side vehicle identification data from an NFC dynamic tag module of the battery-swappable electric vehicle through a reader mode; and executing a battery-binding procedure when the vehicle-side vehicle identification data and a battery-side vehicle identification data in the swappable battery each have a first part corresponding to a vehicle group.

## Description

### BACKGROUND

### Technical Field

The present disclosure relates to a battery-swappable electric vehicle, a swappable battery, and a battery-binding method thereof.

### Description of Related Art

The ECU (Electronic Control Unit) of an electric scooter is one of the core components of the electric scooter and is responsible for controlling the operation of the electric motor, battery, charging and other systems. For example, the ECU is configured to perform verification on the connected swappable battery, and when the verification is passed, control the discharge of the swappable battery to provide the power required for driving the electric scooter. However, the ECU has some shortcomings, such as: (1) it increases the cost of the electric scooter; (2) it has a complex structure, involving electronic components and corresponding firmware, making maintenance difficult; and (3) the ECU must be powered to start and perform the verification, but the swappable battery will not actively release power to the electric scooter before passing the verification, which requires the electric scooter to be equipped with an additional starting battery to provide starting power.

For electric scooter rental services, especially shared scooter services providing rent-and-return anywhere, in order to avoid low available mileage caused by low battery power, maintenance personnel must swap the batteries of shared scooters with low battery power. The problem encountered in the above usage scenario is that since the swappable battery can only power the bound electric scooter, all swappable batteries must be bound in advance at the base before they can be carried to the designated shared scooter for battery swapping. The above method cannot arbitrarily select a shared scooter for battery swapping, which causes inconvenience and low efficiency to the operating personnel.

Accordingly, how to provide a battery-swappable electric vehicle, a swappable battery, and a battery-binding method thereof to solve the aforementioned problems becomes an important issue to be solved by those in the industry.

### SUMMARY

An aspect of the disclosure is to provide a battery-swappable electric vehicle, a swappable battery, and a battery-binding method thereof that can efficiently solve the aforementioned problems.

According to an aspect of the disclosure, a battery-binding method includes: electrically connecting a swappable battery to a battery-swappable electric vehicle, in which a battery-side vehicle identification data stored in the swappable battery conforms to an unbound format; making the swappable battery retrieve a vehicle-side vehicle identification data from an NFC dynamic tag module of the battery-swappable electric vehicle through a reader mode; and executing a battery-binding procedure when the vehicle-side vehicle identification data and the battery-side vehicle identification data each have a first part corresponding to a vehicle group, in which the battery-binding procedure includes: updating the battery-side vehicle identification data at the swappable battery to be consistent with the vehicle-side vehicle identification data.

According to an aspect of the disclosure, a battery-swappable electric vehicle includes a motor, a motor control unit, and a battery interface module. The motor control unit is connected to the motor and configured to control operations of the motor. The battery interface module includes an electrical connector and an NFC dynamic tag module. The electrical connector is configured to be detachably connected to a swappable battery to deliver power from the swappable battery to the motor control unit. The NFC dynamic tag module is electrically connected to the motor control unit and configured to provide a vehicle-side vehicle identification data to the swappable battery through NFC. The swappable battery is configured to perform a battery-binding procedure when connected to the electrical connector and in an unbound state, so as to bind to the battery-swappable electric vehicle.

According to an aspect of the disclosure, a swappable battery includes an electrical connector, an NFC module, and a battery management system. The electrical connector is configured to be detachably connected to a battery-swappable electric vehicle. The NFC module is configured to switch between a Peer-to-Peer mode and a Read/Write mode. The battery management system is electrically connected to the electrical connector and the NFC module, and is configured to execute a battery-binding procedure through the NFC module when the electrical connector is connected to the battery-swappable electric vehicle.

To sum up, according to the battery-swappable electric vehicle of the present disclosure, it uses the NFC dynamic tag module to verify and exchange data with the swappable battery that is unbound. Therefore, the battery-swappable electric vehicle without an ECU can still complete verification with the swappable battery and discharge the swappable battery, thereby reducing the overall cost. According to the battery-binding method of the present disclosure, it provides a dynamic binding solution for the above-mentioned battery-swappable electric vehicle and the swappable battery, so that a shared scooter can be selected for battery swapping at will, which greatly improves the swapping efficiency.

The above is only used to describe the problems to be solved by the present disclosure, technical solutions to solve the problems and their effects, and so on. Specific details of the present disclosure will be described in the following aspects with reference to relevant drawings.

### BRIEF DESCRIPTION OF THE DRAWINGS

In order to make the above and other purposes, features, advantages, and aspects of the present disclosure easier to understand, the accompanying drawings are provided and described as follows.
Fig. 1 is a schematic diagram of an appearance of a battery-swappable electric vehicle according to an aspect of the present disclosure;
Fig. 2 is a schematic diagram of an appearance of a battery barrel and a battery interface module according to an aspect of the present disclosure;
Fig. 3 is a structural diagram of the battery-swappable electric vehicle according to an aspect of the present disclosure;
Fig. 4 is a schematic diagram of communication between some components of the battery-swappable electric vehicle and the swappable battery;
Fig. 5 is a flowchart of a battery-binding method according to an aspect of the present disclosure;
Fig. 6 is a partial flowchart of the battery-binding method according to an aspect of the present disclosure;
Fig. 7 is a flowchart of a battery-binding method according to an aspect of the present disclosure; and
Fig. 8 is a schematic diagram of a battery-swapping operation according to an aspect of the present disclosure.

### DETAILED DESCRIPTION

A plurality of aspects of the present disclosure will be described below with reference to the accompanying drawings. For the sake of clarity, many practical details will be described together in the following description. However, it should be understood that these practical details should not be used to limit the present disclosure. That is to say, in some aspects of the present disclosure, these practical details are not necessary. In addition, for the sake of simplifying the accompanying drawings, some commonly used structures and components are illustrated in the accompanying drawings in a simple schematic manner.

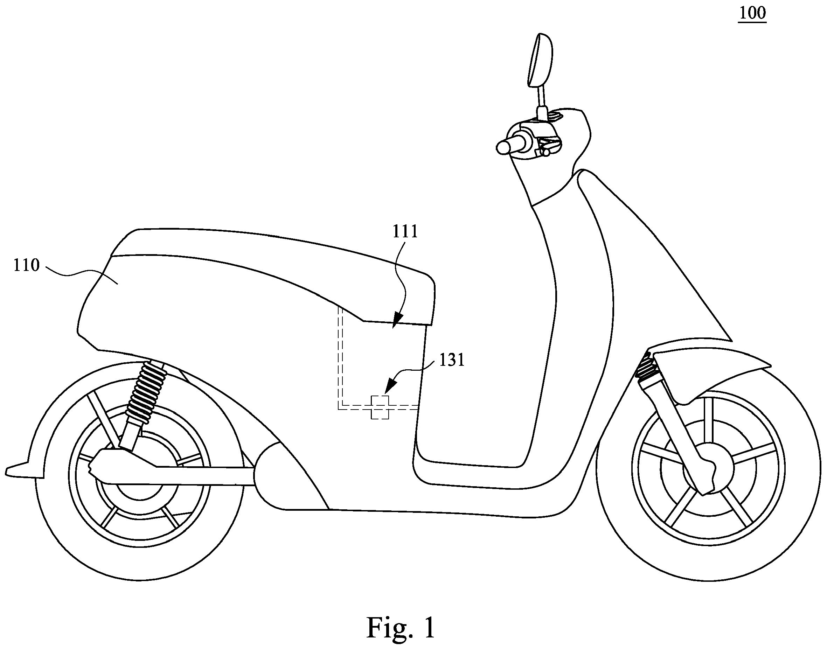

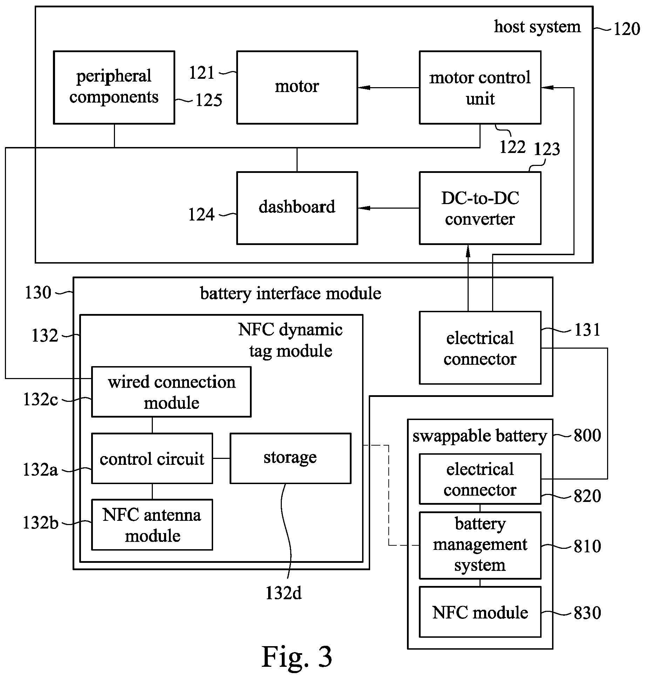

As shown in Fig. 1, a battery-swappable electric vehicle 100 includes a body 110. The body 110 includes a battery barrel 111. An electrical connector 131 is disposed in the battery barrel 111. In some aspects, the accommodating space in the battery barrel 111 can be used as a battery compartment for accommodating an external swappable battery 800 (see Fig. 3), and the electrical connector 131 is configured to establish an electrical connection between a power system of the battery-swappable electric vehicle 100 and an electronic connector 820 of the swappable battery 800.

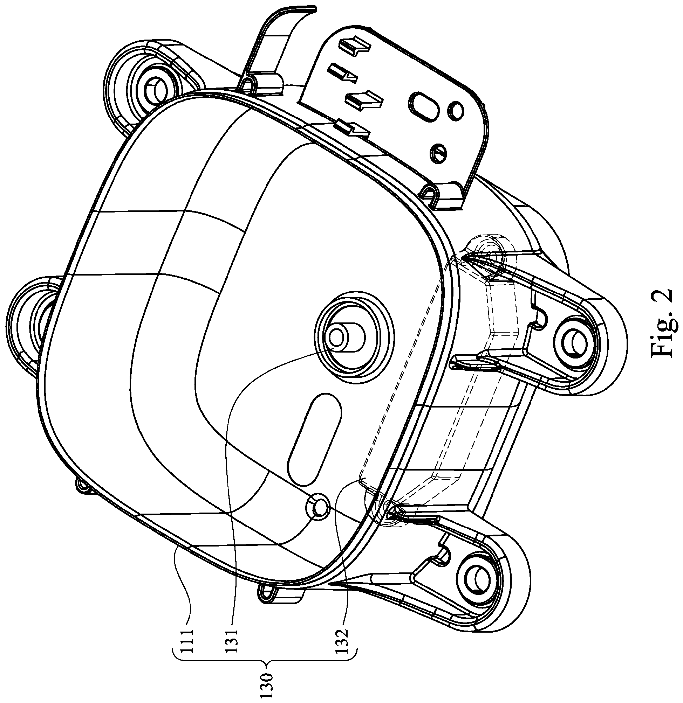

Please refer to Figs. 2 and 3 together. In the present aspect, the battery-swappable electric vehicle 100 includes a host system 120 and a battery interface module 130. The host system 120 is disposed in the body 110 and includes a motor 121, a MCU (motor control unit) 122, a DC-to-DC converter 123, a dashboard 124, and peripheral components 125 (such as Cellular network module, Bluetooth module, lock module, light module, throttle module, brake module, etc.). The MCU 122 is connected to the motor 121 and configured to control operations of the motor 121. The motor 121 is operatively connected to a wheel of the battery-swappable electric vehicle 100 to drive the battery-swappable electric vehicle 100 to move forward or reverse. The battery interface module 130 includes the aforementioned electrical connector 131 and an NFC dynamic tag module 132. Specifically, the electrical connector 131 of the battery interface module 130 is configured to detachably connect to the electrical connector 820 of the swappable battery 800 to deliver the power of the swappable battery 800 to the MCU 122. The electrical connector 131 also provides power to the dashboard 124 and the peripheral components 125 respectively via one or more DC-to-DC converters 123.

The swappable battery 800 includes a battery management system 810, the electrical connector 820, and an NFC module 830. The battery management system 810 includes hardware (such as a controller and related electronic components) and software (such as an operating system and firmware) that can execute together.

Next, the technical problems solved and the technical effects achieved by the present disclosure using the NFC dynamic tag module 132 will be described. NFC technology includes two interaction methods: a Peer-to-Peer mode and a Read/Write mode.

In the Peer-to-Peer mode, an NFC device establishes a Peer-to-Peer connection with another NFC device, and delivers data through the Peer-to-Peer connection. The above-mentioned NFC devices must be connected to external power, which will increase the cost and complexity of the power system. Electric scooters with ECUs usually use this solution, so that the ECUs and swappable batteries can exchange data through the above-mentioned Peer-to-Peer connection.

In the Read/Write mode, an NFC device performs read/write operations on an NFC tag. Specifically, the above-mentioned NFC device is the initiator of interaction (Active Part), such as an NFC reader-writer, and requires external power. The above-mentioned NFC tag is the receiver of interaction (Passive Part). When being read or written, the NFC tag can induct the radio waves emitted by the NFC device to retrieve the inductive power required for operation without requiring external power.

Although using NFC tags has the advantages of being cheap and simplifying the power system, the NFC tags have disadvantages such as the inability to transmit data between multiple devices and poor communication quality.

In order to solve the above problems, the present disclosure uses the NFC dynamic tag module 132. The NFC dynamic tag module 132 includes a wired connection module 132c, an NFC antenna module 132b, a storage 132d (such as a flash memory), and a control circuit 132a electrically connected to the above components. The MCU 122 and other components of the host system 120 are connected to the wired connection module 132c through a transmission line, such as a CAN (Controller Area Network) bus, and configured to access the storage 132d (at this time, the power source of the NFC dynamic tag module 132 can be the MCU 122, the DC-to-DC converter 123, or other power-supply components). The NFC module 830 (i.e., the aforementioned NFC device) of the swappable battery 800 is configured to access the storage 132d through the NFC antenna module 132b.

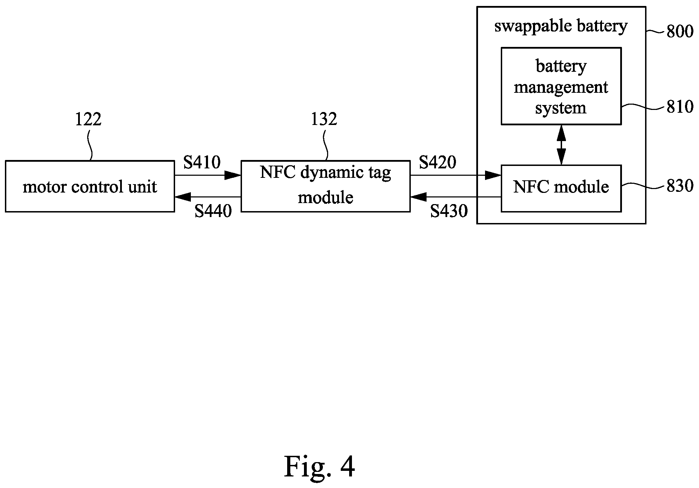

Please further refer to Fig. 4. In the present aspect, by using the NFC dynamic tag module 132 as a storage intermediary, the components of the host system 120 (the MCU 122 will be used as an example below) and the swappable battery 800 can exchange data.

When the MCU 122 wants to provide specific data (first data) to the swappable battery 800, the data can be written into the storage 132d of the NFC dynamic tag module 132 through the transmission line (step S410). Then, the battery management system 810 of the swappable battery 800 can read the NFC dynamic tag module 132 through the NFC module 830 to retrieve the first data (step S420).

When the swappable battery 800 wants to provide specific data (second data) to the MCU 122, the battery management system 810 can perform writing to the NFC dynamic tag module 132 through the NFC module 830 to write the second data to the storage 132d of the NFC dynamic tag module 132 (step S430). Then, the MCU 122 can read the second data from the storage 132d of the NFC dynamic tag module 132 through the transmission line (step S440).

The above-mentioned specific data that can be transferred may be, for example, vehicle-related data, including but not limited to mileage data, log file data, firmware command data, etc.

It is worth mentioning that since the above-mentioned steps S410 and S440 involve the operation of the MCU 122, they must be executed when the battery-swappable electric vehicle 100 is powered on. Since the above steps S420 and S430 can provide inductive power to the NFC dynamic tag module 132 through NFC, they can be executed even if the battery-swappable electric vehicle 100 is powered off.

In this way, when the NFC dynamic tag module 132 is powered (such as the battery-swappable electric vehicle 100 is started), the MCU 122 and the swappable battery 800 can read and write the storage 132d of the NFC dynamic tag module 132 through wired and wireless means respectively. When the NFC dynamic tag module 132 is not powered (for example, the battery-swappable electric vehicle 100 is powered off), the swappable battery 800 can read the storage 132d of the NFC dynamic tag module 132 through wireless means (the reader mode) to perform verification, and is allowed to be discharged to the battery-swappable electric vehicle 100 after the verification is completed, that is, no starting battery is needed to provide starting power.

Although Fig. 4 shows data transmission between the MCU 122 and the swappable battery 800 through the NFC dynamic tag module 132, the data transmission endpoint is not limited to this. In some aspects, the MCU 122 can be replaced by other components of the host system 120 (such as the dashboard 124 or the peripheral components 125) to realize data transmission between the other components and the swappable battery 800.

As shown in Fig. 2, in the present aspect, the electrical connector 131 and the NFC dynamic tag module 132 are disposed at the bottom of the battery barrel 111 and integrated into the battery interface module 130. When the swappable battery 800 is placed in the battery barrel 11 and electrically connected to the electrical connector 131, the NFC module 830 of the swappable battery 800 and the NFC dynamic tag module 132 are within an NFC communication range.

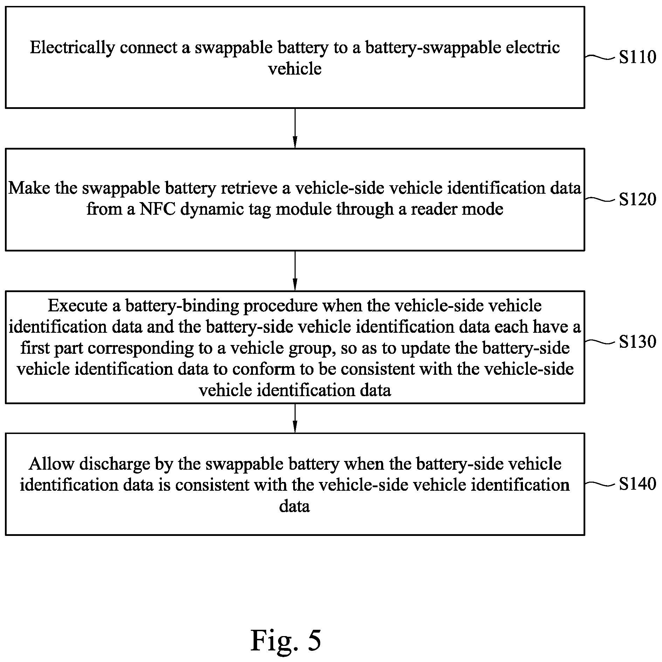

Please further refer to Fig. 5 with reference to Figs. 3 and 4, the present disclosure also provides a battery-binding method. The battery-binding method includes that when an unbound swappable battery (Floating Battery Pack) is connected to any battery-swappable electric vehicle 100 in the same vehicle group, the swappable battery automatically binds the battery-swappable electric vehicle 100 to become a bound swappable battery (Binding Battery Pack) to allow power supply.

It is worth mentioning that in the present disclosure, in order to achieve verification between the swappable battery 800 and the battery-swappable electric vehicle 100, the battery management system 810 of the swappable battery 800 stores a battery-side vehicle identification data, and the storage 132d of the NFC dynamic tag module 132 of the battery-swappable electric vehicle 100 stores a vehicle-side vehicle identification data. The above-mentioned vehicle identification data is, for example, Subscription-ID, User-ID, or Vehicle-ID and other unique and identifying data. When the vehicle-side vehicle identification data is consistent with the battery-side vehicle identification data, it means that the swappable battery 800 has been bound to the battery-swappable electric vehicle 100 and is allowed to be discharged to the battery-swappable electric vehicle 100. The battery-binding method includes steps S110 to S140.

Step S110: maintenance personnel electrically connect a swappable battery 800 (an unbound battery) to any of a plurality of battery-swappable electric vehicles 100 in the same vehicle group, in which the battery-side vehicle identification data stored in the swappable battery 800 conforms to an unbound format, and the battery-swappable electric vehicle 100 includes an NFC dynamic tag module 132 that stores a vehicle-side vehicle identification data.

In some aspects, the battery-side vehicle identification data and the vehicle-side vehicle identification data may each be divided into plurality of parts. The first part of the plurality of parts corresponds to a fleet data or an operator data (i.e., to a specific vehicle group, which may be a fleet or an operator). In other words, the first part, which can be called a prefix, shows the code of the group to which the authorized battery-swappable electric vehicle 100 belongs. For example, the prefix "ABC" represents a shared fleet of vehicles in a group "ABC". The swappable battery 800 with the battery-side vehicle identification data having the prefix "ABC" can be used to perform a battery-binding procedure described below on any battery-swappable electric vehicle 100 belonging to the group "ABC", and provide power after the binding is successful.

A second part of the plurality of parts may be called a suffix, which specifies a specific battery-swappable electric vehicle 100. For example, the second part may be "123456", which is a unique serial number of the authorized battery-swappable electric vehicle 100 and conforms to the bound format. In another aspect, the second part may be a universal identifier temporarily filled in for a group of the authorized battery-swappable electric vehicle 100, such as "000000" or "888888". In another aspect, the second part may be null or blank. It should be noted that before the swappable battery 800 is bound to the battery-swappable electric vehicle 100, the second part of the battery-side vehicle identification data of the swappable battery 800 conforms to the unbound format (such as the above-mentioned universal identifier, null value, or blank) and does not contain the above-mentioned unique serial number.

Step S120: when the swappable battery 800 is electrically connected to the battery-swappable electric vehicle 100 and is within an NFC communication range, a battery management system 810 of the swappable battery 800 controls an NFC module 830 to be under a reader mode, and reads a the NFC dynamic tag module 132 of the battery-swappable electric vehicle 100 through the reader mode to retrieve the vehicle-side vehicle identification data.

In some aspects, the swappable battery 800 is configured to automatically perform step S120 after step S110 is performed. For example, the battery management system 810 of the swappable battery 800 is configured to automatically perform step S120 when detecting that the electrical connector 820 of the swappable battery 800 is connected to the electrical connector 131 of the battery interface module 130.

Step S130: when the swappable battery 800 is electrically connected to the battery-swappable electric vehicle 100 and is within the NFC communication range, the battery management system 810 of the swappable battery 800 executes a battery-binding procedure when determining that the vehicle-side vehicle identification data and the battery-side vehicle identification data each have a first part corresponding to a specific vehicle group, in which the battery-binding procedure includes that the swappable battery 800 updates the battery-side vehicle identification data to be consistent with the vehicle-side vehicle identification data. In some aspects, the battery-binding procedure is only allowed to be executed when the swappable battery 800 is in an unbound state, that is, the battery-binding procedure is not allowed to be executed in a bound state.

For example, when the first part of the vehicle-side vehicle identification data retrieved by the NFC dynamic tag module 132 is the same as the first part of the battery-side vehicle identification data stored in the swappable battery 800 (for example, both are "ABC"), the battery management system 810 of the swappable battery 800 will execute the battery-binding procedure.

Specifically, the battery-binding procedure includes that the battery management system 810 updates the second part of the battery-side vehicle identification data to be consistent with the second part of the vehicle-side vehicle identification data. For example, before executing the battery-binding procedure, the second part of the vehicle-side vehicle identification data is "123456", and the second part of the battery-side vehicle identification data is the above-mentioned universal identifier (unbound format). After the battery-binding procedure is executed, the second part of the battery-side vehicle identification data of the swappable battery 800 will be overwritten by the battery management system 810 as "123456". In this way, the battery-side vehicle identification data stored in the swappable battery 800 is updated to be the same as the vehicle-side vehicle identification data, and represents that the swappable battery 800 is bound to the battery-swappable electric vehicle 100.

Step S140: when the battery management system 810 of the swappable battery 800 determines that the battery-side vehicle identification data is consistent with the vehicle-side vehicle identification data, allowing discharge (MOS on).

It should be noted that the battery-binding procedure is executed when the battery-swappable electric vehicle 100 is powered off. After the swappable battery 800 is bound to the battery-swappable electric vehicle 100, the battery management system 810 allows the swappable battery 800 to discharge. For example, the swappable battery 800 may further include a discharge switch (not shown). The battery management system 810 is configured to control the discharge switch to turn on/off to allow/disable discharge of the swappable battery 800. In some aspects, the discharge switch is a metal oxide semiconductor field effect transistor (MOSFET), but the disclosure is not limited thereto.

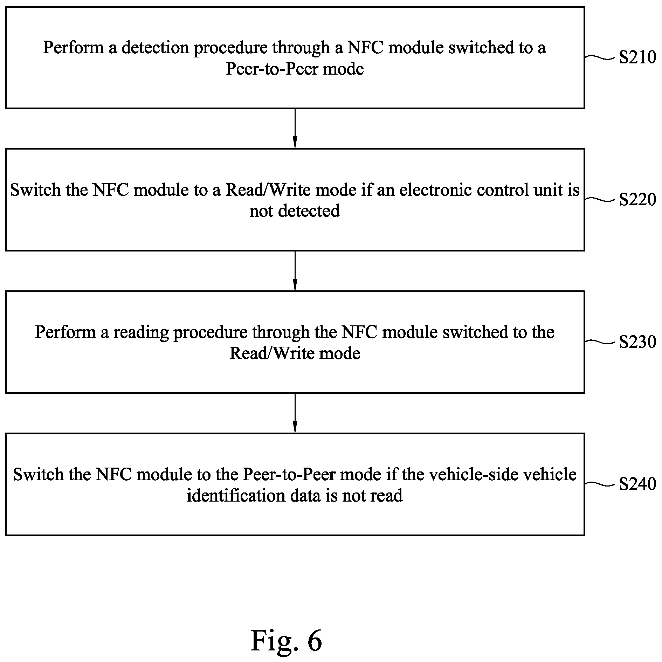

Please further refer to Fig. 6 with reference to Figs. 4 and 5. In some aspects, the battery-binding method of the present disclosure can be applied to both the battery-swappable electric vehicle with the ECU (through the Peer-to-Peer mode) and the battery-swappable electric vehicle 100 with the NFC dynamic tag module 132 (through the reader mode). The battery-binding method further includes step S210 to step S240.

Step S210: the battery management system 810 performs a detection procedure through an NFC module 830 switched to a Peer-to-Peer mode.

If the battery management system 810 detects the ECU in the Peer-to-Peer mode, it attempts to establish an NFC wireless connection (Peer-to-Peer connection) with the ECU of the battery-swappable electric vehicle 100. After the above-mentioned wireless connection is established, it is used to transmit the battery-side vehicle identification data to the ECU for the ECU to perform verification and battery-binding procedures.

Step S220: If the presence of the ECU is not detected, the battery management system 810 controls the NFC module 830 to switch to a Read/Write mode.

Step S230: the battery management system 810 controls the NFC module 830 switched to the Read/Write mode to perform a reading procedure.

If the battery management system 810 senses the NFC dynamic tag module 132 through the NFC module 830 in the reader mode and reads the vehicle-side vehicle identification data, the battery management system 810 executes the verification and battery-binding procedures.

Step S240: If the vehicle-side vehicle identification data of the NFC dynamic tag module 132 is not read, the NFC module 830 is switched to the Peer-to-Peer mode.

In some aspects, when the battery management system 810 fails to retrieve the vehicle-side vehicle identification data after continuous attempts exceeding a predetermined time (such as 500 milliseconds or three times within 150 milliseconds) or exceeding a predetermined number of attempts (such as thirty times) in the same mode, the NFC module 830 is controlled to switch the mode.

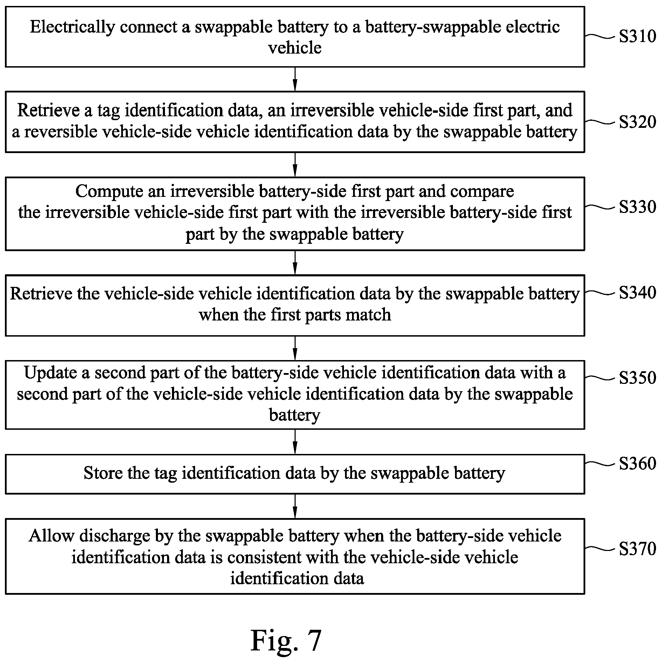

Please further refer to Fig. 7 with reference to Fig. 5. In some aspects, in order to improve security, the data used in the battery-binding method can be encrypted (including reversible and irreversible encryption). The battery-binding method to improve safety includes steps S310 to S370.

In Fig. 7, compared with Fig. 5, step S110 includes step S310, step S120 includes step S320, step S130 includes steps S330 and 340, the battery-binding procedure includes steps S350 and S360, and step S140 includes step S370.

Step S310: maintenance personnel insert an unbound swappable battery 800 into a battery barrel 111 of a battery-swappable electric vehicle 100, so that the swappable battery 800 is electrically connected to an electrical connector 131 and within a communication range of an NFC dynamic tag module 132.

Step S320: the battery management system 810 reads a tag identification data (Tag UID), an irreversible vehicle-side first part of the vehicle-side vehicle identification data and reversible vehicle-side vehicle identification data from the NFC dynamic tag module 132 in a reader mode. The above-mentioned irreversible vehicle-side first part is, for example, an encrypted data retrieved by performing an irreversible encryption process on the first part of the vehicle-side vehicle identification data. The above-mentioned reversible vehicle identification data is, for example, an encrypted data retrieved by performing a reversible encryption process on the vehicle-side vehicle identification data. The above-mentioned irreversible encryption process may be, for example, Hash process. The above-mentioned reversible encryption process may be, for example, public key encryption, password encryption, or other reversible encryption methods.

Step S330: the battery management system 810 performs the same irreversible encryption process based on the first part of a battery-side vehicle identification data thereof to compute an irreversible battery-side first part. Furthermore, the battery management system 810 compares whether the irreversible vehicle-side first part matches the irreversible battery-side first part.

If they do not match, the verification fails and the subsequent battery-binding procedure will not be executed.

Step S340: If they match, the battery management system 810 decrypts the reversible vehicle-side vehicle identification data to retrieve the vehicle-side vehicle identification data. Then the battery-binding procedure is performed.

For example, the battery management system 810 computes a battery-side prefix (Hash) based on the battery-side vehicle identification data stored by itself, and compares it with a vehicle-side prefix (Hash) retrieved by the NFC dynamic tag module 132. If they match, the battery management system 810 further performs decryption based on the vehicle-side vehicle identification data (Encrypted) retrieved by the NFC dynamic tag module 132 and computes a battery-side vehicle identification data (Decrypted).

Step S350: in the battery-binding procedure, the battery management system 810 updates a second part of the battery-side vehicle identification data (such as a suffix) with a second part of the vehicle-side vehicle identification data so that the two match.

Step S360: in the battery-binding procedure, the battery management system 810 stores the tag identification data for identification, recording, and authentication.

Step S370: by executing the battery-binding procedure, the battery-side vehicle identification data matches the vehicle-side vehicle identification data. In this way, the battery management system 810 can complete the verification and allow discharge.

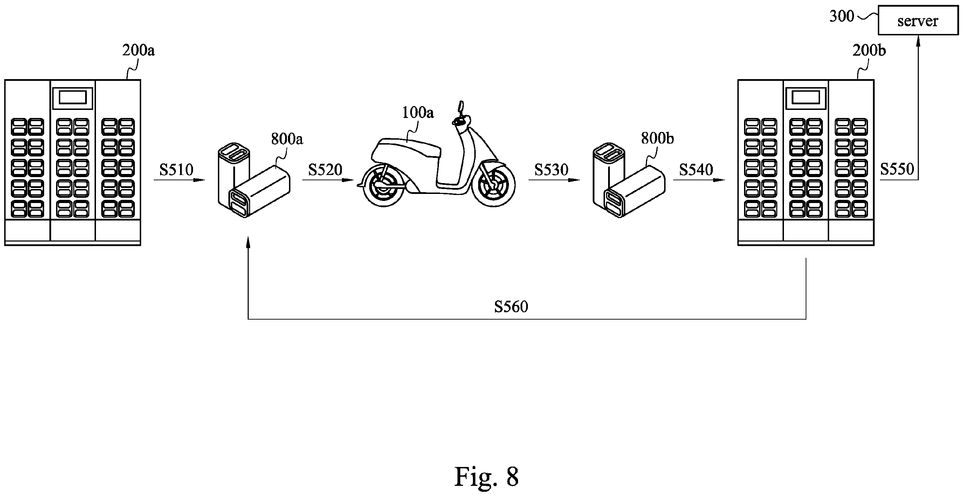

Please refer to Fig. 8 together. In some aspects, the battery-binding method of the present disclosure is further combined with a milk run mechanism, which allows the maintenance personnel to easily get the unbound swappable battery 800, and to easily swap batteries for the battery-swappable electric vehicle 100 (such as a shared electric vehicle). The battery-binding method combined with the milk run mechanism further includes step S510 to step S560.

Step S510: maintenance personnel can retrieve an unbound battery 800a (in normal condition and/or with sufficient power) at a roadside battery swap station 200a, and start looking for a battery-swappable electric vehicle 100a that needs battery swapping.

Step S520: the maintenance personnel arrive at the location of the battery-swappable electric vehicle 100a.

Step S530: the maintenance personnel take out a bound battery 800b (in abnormal status and/or with low battery) in the battery-swappable electric vehicle 100a, and swap it with the unbound battery 800a. Next, the unbound battery 800a and the battery-swappable electric vehicle 100a execute the above verification and battery-binding procedures, such as steps S110 to S140 or steps S310 to S370, to automatically bind and allow power supply.

Step S540: the maintenance personnel carry the swapped bound battery 800b to an adjacent battery swap station 200b and returns it.

Step S550: the battery swap station 200b uploads the data bound to the battery 800b to the server 300.

Step S560: when determining that the bound battery 800b is a battery that complies with the milk run mechanism (such as used for shared electric vehicles), the battery swap station 200b sets a new unbound battery 800a (in normal status and/or with sufficient power) and provides it to the maintenance personnel.

In this way, the maintenance personnel can quickly get unbound swappable batteries through the milk run mechanism, and conveniently swap batteries for battery-swappable electric vehicles.

The battery-swappable electric vehicle disclosed in the present disclosure can realize the verification function of the swappable battery without the need for an ECU, which can effectively reduce costs and achieve the same function. The disclosed battery-binding method for the above-mentioned battery-swappable electric vehicle can greatly improve the swapping efficiency of maintenance personnel.

## Claims

1. A battery-binding method, comprising:
electrically connecting a swappable battery (800) to a battery-swappable electric vehicle (100), wherein a battery-side vehicle identification data stored in the swappable battery (800) conforms to an unbound format;
making the swappable battery (800) retrieve a vehicle-side vehicle identification data from an NFC dynamic tag module (132) of the battery-swappable electric vehicle (100) through a reader mode; and
executing a battery-binding procedure when the vehicle-side vehicle identification data and the battery-side vehicle identification data each have a first part corresponding to a vehicle group,
wherein the battery-binding procedure comprises:
updating the battery-side vehicle identification data at the swappable battery (800) to be consistent with the vehicle-side vehicle identification data.

2. The battery-binding method of claim 1, further comprising:
when the swappable battery (800) determines that the battery-side vehicle identification data is consistent with the vehicle-side vehicle identification data, allowing discharge.

3. The battery-binding method of claim 1 or 2, wherein the vehicle group is a fleet or an operator, the first part corresponds to a fleet data or an operator data, and the swappable battery (800) that is unbound is used to perform the battery-binding procedure on any of a plurality of battery-swappable electric vehicles (100) belonging to the fleet or the operator.

4. The battery-binding method of any of claims 1 to 3, wherein the vehicle-side vehicle identification data and the battery-side vehicle identification data each have a second part, before executing the battery-binding procedure, the second part of the battery-side vehicle identification data conforms to the unbound format, and the battery-binding procedure comprises updating the second part of the battery-side vehicle identification data in the swappable battery (800) with the second part of the vehicle-side vehicle identification data.

5. The battery-binding method of any of claims 1 to 4, further comprising:
enabling a battery management system (810) of the swappable battery (800) and a component (122) of the battery-swappable electric vehicle (100) to transmit data through the NFC dynamic tag module (132).

6. The battery-binding method of claim 5, wherein enabling the battery management system (810) and the component (122) of the battery-swappable electric vehicle (100) to transmit data through the NFC dynamic tag module (132) comprises:
enabling the component (122) to write a vehicle-related data to the NFC dynamic tag module (132) through a transmission line, and enabling the battery management system (810) to read the vehicle-related data from the NFC dynamic tag module (132) through NFC; and
enabling the battery management system (810) to write the vehicle-related data to the NFC dynamic tag module (132) through NFC, and enabling the component (122) to read the vehicle-related data from the NFC dynamic tag module (132) through the transmission line.

7. The battery-binding method of claim 6, wherein the vehicle-related data comprises at least one of a mileage data, a log file data, and a firmware command data.

8. The battery-binding method of any of claims 1 to 7, wherein the battery-binding procedure is executed when the battery-swappable electric vehicle (100) is powered off.

9. The battery-binding method of any of claims 1 to 8, further comprising, after electrically connecting the swappable battery (800) to the battery-swappable electric vehicle (100), steps of:
making the swappable battery (800) to switch to the reader mode to attempt to read the vehicle-side vehicle identification data from the battery-swappable electric vehicle (100); and
when the vehicle-side vehicle identification data cannot be retrieved after a predetermined time or a predetermined number of readings, making the swappable battery (800) to switch to a Peer-to-Peer mode to attempt to establish a wireless connection with an electronic control unit of the battery-swappable electric vehicle (100), wherein the wireless connection is used to transmit the battery-side vehicle identification data to the electronic control unit.

10. The battery-binding method of any of claims 1 to 9, wherein making the swappable battery (800) retrieve the vehicle-side vehicle identification data from the NFC dynamic tag module (132) of the battery-swappable electric vehicle (100) through the reader mode comprises:
retrieving, from the NFC dynamic tag module (132), a tag identification data, an irreversible vehicle-side first part of the vehicle-side vehicle identification data that is irreversibly encrypted, and a reversible vehicle-side vehicle identification data that is reversibly encrypted;
wherein executing the battery-binding procedure when the vehicle-side vehicle identification data and the battery-side vehicle identification data each have the first part corresponding to the vehicle group comprises:
computing an irreversible battery-side first part of the battery-side vehicle identification data that is irreversibly encrypted at the swappable battery (800) based on the first part of the battery-side vehicle identification data; and
comparing the irreversible vehicle-side first part with the irreversible battery-side first part;
wherein updating the battery-side vehicle identification data at the swappable battery (800) to be consistent with the vehicle-side vehicle identification data comprises:
decrypting the reversible vehicle-side vehicle identification data at the swappable battery (800) to retrieve the vehicle-side vehicle identification data;
updating a second part of the battery-side vehicle identification data with a second part of the vehicle-side vehicle identification data; and
storing the tag identification data.

11. A battery-swappable electric vehicle (100), comprising:
a motor (121);
a motor control unit (122) connected to the motor and configured to control operations of the motor (121); and
a battery interface module (130) comprising:
an electrical connector (131) configured to be detachably connected to a swappable battery (800) to deliver power from the swappable battery (800) to the motor control unit (122); and
an NFC dynamic tag module (132) electrically connected to the motor control unit (122) and configured to provide a vehicle-side vehicle identification data to the swappable battery (800) through NFC,
wherein the swappable battery (800) is configured to perform a battery-binding procedure when connected to the electrical connector (131) and in an unbound state, so as to bind to the battery-swappable electric vehicle (100).

12. The battery-swappable electric vehicle (100) of claim 11, wherein the battery-swappable electric vehicle (100) is not powered during execution of the battery-binding procedure.

13. A swappable battery (800), comprising:
an electrical connector (820) configured to be detachably connected to a battery-swappable electric vehicle (100);
an NFC module (830) configured to switch between a Peer-to-Peer mode and a Read/Write mode; and
a battery management system (810) electrically connected to the electrical connector (820) and the NFC module (830), and configured to execute a battery-binding procedure through the NFC module (830) when the electrical connector (820) is connected to the battery-swappable electric vehicle (100).

14. The swappable battery (800) of claim 13, wherein the battery management system (810) is configured to:
detect through the NFC module (830) switched to the Peer-to-Peer mode;
switch the NFC module (830) to the Read/Write mode if an electronic control unit of the battery-swappable electric vehicle (100) is not detected; and
read through the NFC module (830) switched to the Read/Write mode.

15. The swappable battery (800) of claim 14, wherein the battery management system (810) is configured to detect three times or read thirty times within 150 milliseconds.
